# EUROPEAN PATENT APPLICATION

(11) **EP 1 067 364 A1**
(43) Date of publication of application: **10.01.2001**
(21) Application number: 00202308.3
(22) Date of filing: 30.06.2000
(51) Int. Cl.: G01C 21/36, G08G 1/127

(54) **System for traffic guidance**

(30) Priority: 02.07.1999 NL 1012492
(71) Applicant: van der Sluijs, Johan Hugo, 3816 AR Amersfort (NL); Halleriet, Hendrikus Gerardus Egidius, 3816 AR Amersfort (NL)
(72) Inventor: van der Sluijs, Johan Hugo, 3816 AR Amersfort (NL); Halleriet, Hendrikus Gerardus Egidius, 3816 AR Amersfort (NL)
(74) Representative: Jorritsma, Ruurd

(57) **Abstract**

System for traffic guidance of a number of vehicles which each are making a voyage or are going to make a voyage along a road network from a predetermined starting point to a predetermined destination point, whereby the vehicles form a part of all vehicles which at any moment make use of the road network, which system comprises at least one center having a traffic management system by means of which for each of said number of vehicles data is generated, as well as communication means for transferring data, destined for a predetermined vehicle, to the driver of said vehicle and for receiving data from the driver of said vehicle. Before starting travelling data is transferred by the driver of a vehicle to the center comprising amongst other the starting point and the destination point of the voyage in response to which the center returns data comprising at least a moment in time at which the vehicle has to start from the starting point.

## Description

The invention relates to a system for traffic guidance of a number of vehicles which each are making a voyage or are going to make a voyage along a road network from a predetermined starting point to a predetermined destination point, whereby the vehicles form a part of all vehicles which at any moment make use of the road network, which system comprises at least one center having a traffic management system by means of which for each of said number of vehicles data is generated, as well as communication means for transferring data, destined for a predetermined vehicle, to said vehicle and for receiving data from said vehicle, whereby each of the drivers of said number of vehicles has communication means for receiving the data destined for said vehicle and for transferring data to the center, as well as means for processing the received data in a suitable manner.

Such systems are known in various embodiments.

An example of such a system is described in WO9214215. The user of this system reports by telephone to a central station which asks for the starting point and the destination point of the voyage. The user provides the starting point and destination point of the voyage and indicates also at what time he wants to leave. Taking into account the general traffic data which are continuously fed to the computer, said computer now calculates which route has to be followed to travel as fast as possible from the starting point to the destination point. Said route is transferred to the user whereafter the connection is closed. The user has to decide himself if he follows this route or not and if he starts at the indicated moment in time or not. This system enables the users to follow an optimal route so that the chances on traffic jams are decreasing. However, if the traffic offer becomes too large this system is not able to prevent the forming of a traffic jam. Furthermore this system does not or hardly function if there are no proper alternative routes available to avoid the heavy traffic sections in a specific route.

Another example of such a system is described in DE-19713802. A user of this system will, before he departs with his vehicle from a starting point to a predetermined destination point, get in contact with the most nearby center and will inform the center about the starting point and destination point. In response the center provides the necessary traffic information, especially information about momentaneous traffic jams, delays etc. and provides eventual indications about a favourable route to be followed from the starting point to the provided destination point. Thereafter the user and his vehicle may follow these indications as well as the provided route, but for whatever reason he may also deviate from said route. This system is based on voluntary co-operation of the vehicle user. There are no sanctions for vehicles which deviate from the indicated route.

Another prior art system of comparable type is described in DE-19651143. This prior art system assists user in selecting the optimal route from the starting point to the destination point by providing the users access to traffic information which cannot be observed by the user itself. The user benefits only from this type of system if there are acceptable alternative routes available.

One of the most important problems in traffic guidance systems is formed by the traffic jams. Traffic jams are caused by a temporary and local overload of the local road capacity. In other words, if at any moment and at any place more vehicles than allowed by the capacity of a road want to travel along said road a traffic jam will be the result. The local road capacity in a given direction can be defined as the maximum number of vehicles which per unit of time are able to pass a predetermined point on the road in that direction. This road capacity is dependent on the velocity of the vehicles travelling along said road. Because at any velocity vehicles have to maintain a certain minimum intermediate distance to be able to brake safely and because this intermediate distance grows non linearly with increasing velocity there is for each road a certain optimum velocity whereby the road capacity is at maximum. If the velocity of the vehicles is increased then also the mutual distance to the neighbouring vehicles has to be increased. Therefore above the optimum velocity in fact the road capacity is decreasing. On the other hand if the velocity is decreasing from said optimum then it will be clear that the road capacity is also decreasing even if the intermediate distance between the vehicles can be smaller (however not equal to zero). Influencing the velocity of the vehicles which are travelling along a road therefore has influence on the prevention of an eventual traffic jam, but in practice this influence appears to be rather small. Practice has proven that by influencing the velocity the build-up of a traffic jam cannot be prevented.

In the most prior art systems one tries to prevent the occurrence of a traffic jam by spreading the traffic along more roads so that not all vehicles will use one and the same road. By spreading the traffic a local overload of a predetermined road which would cause a traffic jam on said road, can be prevented. Also in the above mentioned systems the data, which from the center will be transferred to each participating vehicle, will provide such preferential indications that the respective vehicle, if the vehicle follows said indications, will make use of roads onto which at that moment no traffic jam is present and onto which there is no danger or at least a smaller danger of building up a traffic jam, or roads where the traffic jam is rather short so that the expected delay will be rather short also.

Not in all cases however there are alternatives so that not in all cases spreading can be realised. There are often situations whereby it is impossible to avoid a predetermined road segment (for instance a bridge across a waterway, for which there is no alternative, a railroad crossing for which there is no alternative etc.), or the alternatives are very unattractive.

As indicated above a traffic jam is built up as result of a local temporary overload of the road. Overload means that the traffic offer is locally and temporarily larger than the maximum road capacity. Because a too large number of vehicles like to use the same route almost simultaneously a traffic jam is built up. The time factor is not or hardly taken into account in said prior art systems.

As such systems are known in which one has to pay toll in case one wants to make use of a road during one or more predetermined periods per day. In case one wants to make use of this road outside said periods then no toll is due. It will be clear that toll has to be paid during those periods wherein there is in general a larger chance on traffic jams. By collecting toll the user of the road is more or less forced, if he nevertheless wants to make use of the road, to do that on other moments in time. Even with such a system many users do not have an alternative. The periods, during which toll has to be paid are in general selected such that the respective voyage has to be made much too early or much too late to avoid toll payment. Therefore applicant expects that with such toll payment systems no adequate control mechanism is obtained to solve the traffic jam problem.

Applicant has now recognised that the above mentioned time factor is not sufficiently taken into account and proposes a system by means of which the traffic offer is spread in time such that this system continuously tries to avoid overload of the road on each location within the whole network in which the system is applied.

In agreement with this object the invention now provides a system of the type described in the first paragraph of this specification, which system has the characteristic that before starting travelling data are transferred to the center comprising amongst other the starting point and the destination point of the voyage in response to which the center returns data comprising at least a moment in time at which the vehicle has to start from the starting point. It will be clear that the central post will determine said moments in time such that the resulting traffic offer will nowhere on the road network where the system is applied lead to traffic jams. If a road user reports to the center that he likes to depart for a voyage on a moment in time on to which the expected traffic offer equals the optimal road capacity then the center will propose an earlier and a later departure time which however should be as close as possible near the departure time which was desired by the road user. The road user makes his choice between the two proposed departure times and communicates his choice to the center.

In practice it will presumably not always be possible to maintain an exact starting time and therefore is preferred that the time is indicated within a certain range, whereby the actual starting time has to be within said range.

The initial data transfer can take place through any suitable channel, for instance by telephone, e-mail, fax etc. and is not necessarily coupled in one way or another to the vehicle. As soon as the driver takes place in the vehicle the further communication may take place through communication means in said vehicle.

If the number of vehicles taking part in the system is relatively large in comparison with the number of vehicles not taking part in the system then, by appointing a time slot to the participants of the system the center has the possibility to timespread the total traffic sufficiently equal in time such that temporary overload of any predetermined part of the road is unlikely so that the traffic jam problem at least for the major part is solved. In fact this is a very essential characteristic of the system according to the invention, namely to control the traffic such that jams are avoided by controlling the number of vehicles forming a part of the traffic at any moment.

A significant improvement of the system can be obtained in case the system is embodied such that the data, transferred to the vehicle, covers, besides said moment in time, also an indication about the route to be followed between the starting point and the destination point.

A further improvement of the system can be obtained in case the system is embodied such that the data transferred to the driver of the vehicle comprises not only said moment in time but comprises also the velocity which has to be maintained as good as possible during the voyage. If the vehicle comprises communication means then new instructions can be received during the voyage instructing the driver to maintain another velocity or to follow another route. Such a situation will for instance appear in case the traffic situation is temporarily strongly changed because of an incident or of an accident.

It is further preferred that the communication means at least in the vehicles are mobile telephone apparatuses. Preferably these apparatuses operate in agreement with the GSM-system.

It is remarked that as such time slots are already known from the airtraffic control. In the airtraffic control it is rather common that airplanes are allowed to depart only within a predetermined time slot, they are only allowed to travel along a predetermined traject with such a speed that they will arrive at their destination also within a predetermined time slot. Therewith a traffic jam in the air is effectively prevented.

The use of prescribed obligatory time slots for traffic control of vehicles moving on wheels implies that the user of a vehicle has to give up a part of his decision freedom. Not every traffic participant will do that without striking a blow. Nevertheless, the system according to the invention functions only optimal in case a large number of traffic participants make use of the system. That implies in one way or another that the system has to be made attractive so that one likes to participate or care is taken that not using the system results in such disadvantages that one still will participate in the system. One of the possibilities in this respect could be that the participant in the system does not have to pay toll for using predetermined road sections in case the participant sticks to all indications (time slot for departure, route and velocity) where other road users have to pay toll. As already remarked above one plays with the idea to introduce toll gate systems on busy road sections which are embodied such that a traffic participant, who wants to make use of this road section during a predetermined period, has to pay therefore. In the now proposed systems the payment is performed in a completely electronic manner by detecting the vehicle and forwarding a debit note to the address of the user. By rewarding the road user he/she is stimulated to become a positioner of the system. The higher the reward the more road users will decide to become a positioner and the more influence the system will have on the traffic.

If there are no specific measures taken in the system then there is no possibility to check if a participating vehicle indeed has departed within the predetermined time slot to start the appointed voyage. To be able to effect a certain amount of control and to simplify furthermore the indication of the departure time it is preferred that each vehicle comprises a position determining apparatus by means of which the momentaneous geographic position of the vehicle can be determined, which position determining apparatus is coupled to the communication means such that the center is able to ask for the momentaneous position of the vehicle through the communication means. In this embodiment the center is able to determine the position of a vehicle at any time. Therewith the center is able to check whether a vehicle, which had to departure within a predetermined time slot from a predetermined starting point, is at a later moment in time indeed at some distance of said starting point and is therefore busy with the voyage along the predetermined route. As indicated above the initial instructions could be changed during the voyage by the center. Checks can also be performed by using existing tollgates. The information derived from these tollgates can be compared with the information present in the central post of the underlying system to see if a participating vehicle indeed has passed the toll gate within a predetermined time zone indicating that the respective vehicle indeed follows its instructions.

Although there are various apparatuses for position determining, a GPS-receiver is preferred. Such a receiver receives signals from at least three satellites forming part of the "Global Positioning System" and is able to derive therefrom with large accuracy (in the order of 10 meter or less) the geographical position on earth. Other position determining systems are for instance based on the cell information of the GSM system, geographical co-ordinates or others and can be applied within the frame of the invention.

The invention will now be explained in more detail with reference to the attached drawings.
Figure 1 illustrates very schematically a number of components in a system according to the invention.
Figure 2 illustrates with reference to a diagram the number of vehicles passing along a specific point of a road without any traffic control and the number with traffic guidance in agreement with the system according to the invention.
Figure 3 illustrates a diagram from which appears that there is a predetermined optimum in the velocity of the traffic which passes a predetermined point in a road and one wants to use the capacity of the road as good as possible.

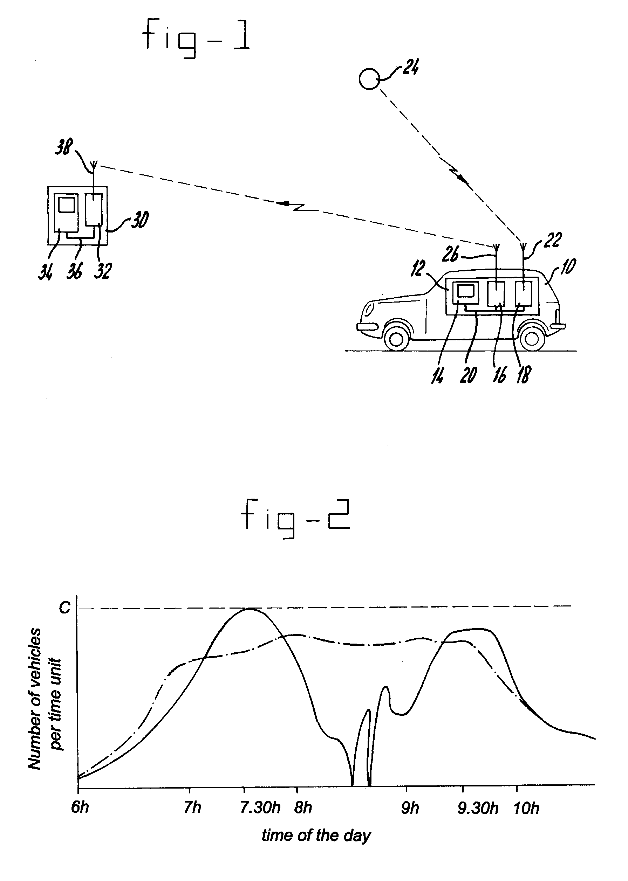

Figure 1 illustrates very schematically a number of components in a system according to the invention. For a start the system comprises a number of vehicles, one of which is schematically indicated by 10. The vehicle 10 comprises an apparatus 12 which covers amongst others a navigation computer 14, a mobile telephone 16 and a GPS-receiver 18. Said three components 14, 16 and 18 are through a common bus 20 mutually coupled.

The GPS-receiver 18 receives through its antenna 22 signals from a system of satellites forming part of the global positioning system. One of the satellites is schematically indicated by 24. The functioning of the GPS-system is considered known to the expert in this field and will therefore not be explained any further.

The mobile telephone 16 comprises and antenna 26 through which signals are received from base stations 32. Each base station 32 belongs to a center 30.

At the left side of the figure schematically a center 30 is shown, which includes at least a base station 32, and a traffic guiding computer 34. Also in this case the traffic guiding computer 34 and the base station 32 are mutually connected through a suitable bus 36. Preferably the base stations 32 are part of a GSM network.

It is remarked that in practice more than one base station will be applied which all are able to communicate mutually in a suitable manner. Especially the traffic guiding computers will be taken up in a network and will together form a computer system.

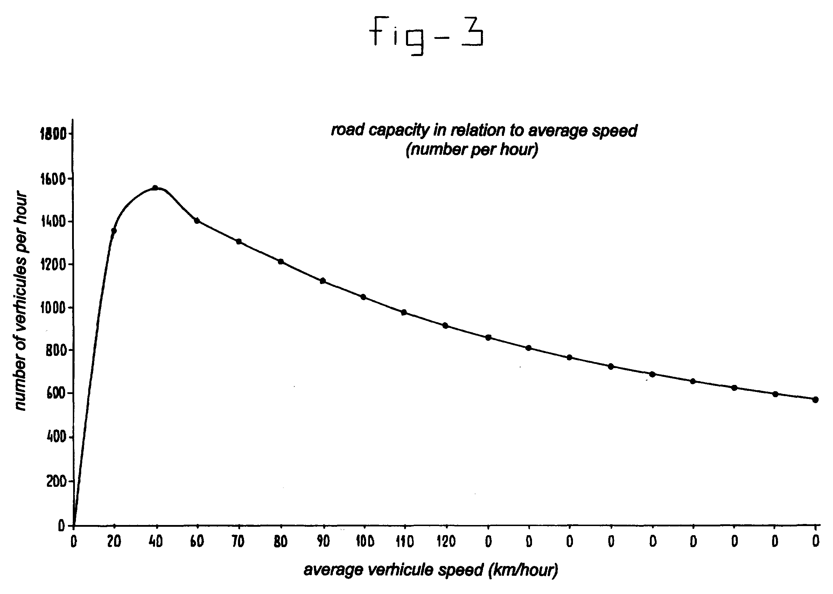

Before the functioning of the system, schematically indicated in figure 1, will be discussed in more detail first of all the attention is drawn to figure 2. In figure 2 the continuous line indicates how on an imaginary road the number of vehicles passing a certain point per time unit may vary dependent on the time of the day. At 6 o'clock in the morning the offer of vehicles is relatively low and there is a continuous traffic flow. As time goes by the offer increases and therefore the number of vehicles which per unit of time passes a reference point will increase upto about 7.30 when the maximum capacity C of the road is reached. However, because the offer still increases a traffic jamming will start building up and vehicles gradually will move slower and slower with the result that the number of vehicles which for the time unit passes the reference point is strongly decreasing. With strong fluctuations which even may reach the zero point (when traffic has come to a stand still) a strongly varying number of vehicles passes the reference point per time unit. Until shortly after 9 o'clock the traffic jam is resolved and vehicles are able to pass the reference point with a reasonable velocity. At that moment the capacity is rather high and the number of vehicles per time unit will, although underneath the line C, be relatively large. From thereon the total offer is decreasing and after 10 o'clock there is no chance anymore on a traffic jam.

As appears from figure 2 the actual relatively high capacity C will between 7.30 and 9.30 not be used because of the building of a traffic jam on the road. The vehicles on the road are standing still or are driving very slowly with the result that only a very small amount of vehicles are passing the reference point per time unit.

The system according to figure 1 now tries to solve this problem by controlling in a time dependent manner the offer of vehicles. The driver of a participating vehicle 10 which from a predetermined starting point wants to drive to a predetermined destination point gets into contact with the center 30 through the apparatus 12 (mobile telephone 16, antenna 26, antenna 38 and *base station* 32) and reports the starting point and destination point of the intended voyage (this initial data transfer may take place through other existing communication channels). The system of traffic guidance computers 34 calculates a moment in time on which the vehicle 10 may depart to drive from starting point to destination point without traffic jams along a predetermined route, whereby the computer 34 eventually provides a selection of alternatives routes. The computer 34 then provides a serious of data through the communication link back to the apparatus 12 of the vehicle 10, which series of data is stored and processed in the navigation computer 14. At that moment in time it is known in the computer 14 amongst others which route the vehicle has to follow with which preferred velocity and it is also known at which moment in time the vehicle has to depart. This moment in time is within a so-called time slot, issued period during which the vehicle has the opportunity to start with its voyage. The traffic guidance computers 34 is able to adapt the route eventually during the voyage. Because each vehicle 10 which participates in this system starts its journey within a predetermined time slot it is possible for the computer 34 to calculate which traffic offer can be expected at which time moment in time and at which road. Based on these calculated expectations further time slots will be assigned to further vehicles.

In figure 2 it is indicated schematically what the result of this time slot distribution could be. The dotted line indicates that part of the vehicles receive instructions to start a bit earlier than normal. Therefore the number of vehicles per time unit on the road will increase faster than indicated by the continuous line. The maximum around 7.30 however will not be obtained because the computer 34 has restricted the number of assigned time slots such that the maximum capacity C is not reached. The computer 34 takes care on the other hand that there is a relatively constant offer of vehicles so that the number of vehicles which passes the reference per time unit between around 7.30 and around 9.30 will be as constant and as high as possible without reaching the maximum capacity C. After 9.30 the number of vehicles which passes the reference point per time unit will decrease because the offer is decreasing. Around 10 o'clock the continuous line and the dotted line overlap each other.

Above it is assumed that the necessary equipment is present in the vehicle. That does not imply however that the equipment has to be installed in a definite manner in the vehicle. In many cases it is preferred to embody the total apparatus as a mobile unit which, if necessary, can be used for another vehicle.

Figure 3 illustrates a plot of the number of vehicles per hour passing a reference point as function of the average speed of said vehicles. As already discussed above the number of vehicles will start from 0 to a maximum (in this example ± 1600) at a certain speed (in this example ± 40 km/hour). At higher speeds the number of cars will decrease, in other words the capacity of the road at higher speeds above the optimum speeds will decrease.

## Claims

1. System for traffic guidance of a number of vehicles which each are making a voyage or are going to make a voyage along a road network from a predetermined starting point to a predetermined destination point, whereby the vehicles form a part of all vehicles which at any moment make use of the road network, which system comprises at least one center having a traffic management system by means of which for each of said number of vehicles data is generated, as well as communication means for transferring data, destined for a predetermined vehicle, to the driver of said vehicle and for receiving data from the driver of said vehicle,
characterized in that before starting travelling data is transferred by the driver of a vehicle to the center comprising amongst other the starting point and the destination point of the voyage in response to which the center returns data comprising at least a moment in time at which the vehicle has to start from the starting point.

2. System according to claim 1, characterized in that the moment in time is defined within a certain timespan, within which timespan the actual starting time has to be.

3. System according to claim 1 or 2, characterized in that the initial data transfer can take place through any suitable medium.

4. System according to one of the preceding claims, characterized in that the data, transferred to the driver of said vehicle, comprises besides said moment in time also an indication of the route to be followed between the starting point and the destination point.

5. System according to one of the preceding claims, characterized in that the data transferred to the driver of said vehicle comprises besides said moment in time also an indication of the velocity which has to be maintained as accurately as possible during the voyage.

6. System according to one of the preceding claims, characterized in that at least a part of the number of vehicles comprises a position determining apparatus by means of which the momentaneous geographical position of the vehicle can be determined, which position determining apparatus is coupled to the communication means such that the center is able to inform about the momentaneous position of the vehicle through said communication means.

7. System according to claim 6, characterized in that the position determining apparatus is a GPS-receiver, known as such.

8. System according to one of the preceding claims, characterized in that at least in the vehicles the communication means are embodied as mobile telephone apparatuses.

9. System according to claim 8, characterized in that the mobile telephone apparatuses are operating according to the GSM-standard.
